# EUROPÄISCHE PATENTSCHRIFT

(11) **EP 3 802 222 B1**
(45) Veröffentlichungstag und Bekanntmachung des Hinweises auf die Patenterteilung: **30.03.2022**
(21) Anmeldenummer: 19732272.0
(22) Anmeldetag: 07.06.2019
(51) Int. Cl.: B60R 1/076, B60R 11/04, B60R 1/06

(54) **HALTERUNG FÜR EINE KAMERA AN EINEM KRAFTFAHRZEUG**
SUPPORT FOR A CAMERA ON A MOTOR VEHICLE
SUPPORT POUR CAMÉRA SUR UN VÉHICULE AUTOMOBILE

(30) Priorität: 11.06.2018 DE 102018209288
(43) Veröffentlichungstag der Anmeldung: 14.04.2021
(73) Patentinhaber: Continental Automotive GmbH, 30165 Hannover (DE)
(72) Erfinder: GRÜNIG, Thomas, 65824 Schwalbach a. Ts. (DE); WEHL, Sebastian, 65824 Schwalbach a. Ts. (DE)
(74) Vertreter: Continental Corporation
(86) Internationale Anmeldenummer: PCT/EP2019/064913
(87) Internationale Veröffentlichungsnummer: WO 2019/238549

(56) Entgegenhaltungen:
- WO-A1-2011/086131
- WO-A1-2017/164067
- DE-B3-102012 015 395
- DE-B3-102017 001 122

## Beschreibung

Die Erfindung betrifft eine Halterung für eine Kamera für ein Kraftfahrzeug.

Insbesondere ist die an der Halterung angeordnete Kamera zur Erfassung eines Bildbereichs, der außerhalb des Kraftfahrzeugs angeordnet ist, vorgesehen. Insbesondere ist die Kamera als Ersatz für bekannte Seitenspiegel eines Kraftfahrzeuges vorgesehen.

Es sind Seitenspiegel für Kraftfahrzeuge bekannt, die gegenüber der Karosserie des Kraftfahrzeugs zur Erfassung eines individuell einstellbaren Bildbereichs verdrehbar sind.

Weiter sind Kameras bekannt, die über Halterungen an der Karosserie angeordnet werden können. Üblicherweise sind die Kameras über starre Halterungen an der Karosserie angebunden.

Aus der DE 10 2012 015 395 B3 ist ein klappbarer Kameraarm für ein Kraftfahrzeug bekannt.

Im Betrieb des Kraftfahrzeugs können Kontaktierungen zwischen Halterung bzw.

Kamera und außerhalb des Kraftfahrzeugs angeordneten anderen Objekten (anderen Kraftfahrzeugen, Personen) die Halterung bzw. die Kamera beschädigen. Gerade bei einer starren Anordnung der Kamera ist auch eine Schädigung der anderen Objekte möglich.

Aus WO 2011/086131 A1 ist eine Vorrichtung für ein Kraftfahrzeug mit einer bewegbar gelagerten Kameraeinheit bekannt, die dem Oberbegriff des Patentanspruchs 1 entspricht. Die Kameraeinheit ist über eine Antriebseinheit in eine Ruheposition und in eine aktive Position bringbar und an einem bewegbar gelagerten Schwenkarm angeordnet. Der Schwenkarm verbindet die Antriebseinheit mit einem Schutzelement. Durch eine von der Antriebseinheit ausgelöste Bewegung des Schwenkarms sind das Schutzelement in eine Schließstellung und in eine Offenstellung sowie die Kameraeinheit in die Ruheposition und in die aktive Position führbar.

Aufgabe der vorliegenden Erfindung ist es, die mit Bezug auf den Stand der Technik angeführten Probleme zumindest teilweise zu lösen. Insbesondere soll eine Halterung vorgeschlagen werden, die zumindest teilweise gegenüber der Karossiere beweglich ist.

Zur Lösung dieser Aufgaben trägt eine Halterung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Halterung für eine Kamera (ggf. alternativ oder zusätzlich für Sensoren) an einem Kraftfahrzeug vorgeschlagen. Die Halterung weist zumindest einen Grundkörper mit einer Führung und ein mit dem Grundkörper über zumindest eine Führungsschiene verbundenes, gegenüber dem Grundkörper verschwenkbares Halte- element auf. Das Halteelement erstreckt sich zwischen einem ersten Ende und einem zweiten Ende entlang einer Erstreckung. Am zweiten Ende ist die Kamera anordenbar bzw. angeordnet. Das erste Ende ist an der Führung angeordnet. Das Halteelement ist zwischen dem ersten Ende und dem zweiten Ende mit der zumindest einen Führungsschiene verschwenkbar verbunden. Bei einer Verschwenkung des Halteelements ist das erste Ende entlang der Führung und das Halteelement (gegenüber dem Grundkörper) entlang der Führungsschiene verlagerbar.

Die Halterung kann über den Grundkörper insbesondere an einer Karosserie eines Kraftfahrzeuges angeordnet sein. Die zumindest eine Führungsschiene ist insbesondere fest mit dem Grundkörper bzw. mit der Karosserie verbunden, wobei das Halteelement entlang der Führungsschiene verlagerbar und gegenüber der Karossiere beweglich angeordnet ist.

Insbesondere bewegt sich das Halteelement bei der Verschwenkung gegenüber dem Grundkörper bzw. gegenüber der zumindest einen Führungsschiene und bei der Verlagerung entlang der zumindest einen Führungsschiene in einer gemeinsamen Ebene.

Die Führung und die zumindest eine Führungsschiene sind ortsfest zueinander angeordnet.

Bevorzugt ist das Halteelement über einen Zapfen drehbar an der zumindest einen Führungsschiene gelagert. Insbesondere wird das Halteelement über den Zapfen entlang der zumindest einen Führungsschiene geführt.

Insbesondere ist das Halteelement gegenüber dem Zapfen verschwenkbar. Insbesondere ist der Zapfen in der Führungsschiene verlagerbar angeordnet. Insbesondere ist der Zapfen gegenüber der Führungsschiene drehbar angeordnet. Alternativ ist der Zapfen nicht gegenüber der Führungsschiene drehbar.

Das Halteelement ist über zumindest ein Federelement mit dem Grundkörper verbunden. Insbesondere ist der Zapfen, über den das Halteelement drehbar an der zumindest einen Führungsschiene gelagert ist, über das Federelement mit dem Grundkörper verbunden.

Bevorzugt ist das zumindest eine Federelement eine Zugfeder. Ggf. können auch mehrere Federelemente vorgesehen sein.

Insbesondere ist das erste Ende in einer Ausgangsposition des Halteelements in einer Rastposition der Führung angeordnet. Die Rastposition wird z. B. durch eine Vertiefung der Führung gebildet, in der das Halteelement mit einer Rastnase angeordnet ist.

Bevorzugt weist die Führung benachbart zu der Rastposition einen Gleitbereich auf, wobei die Rastposition so ausgeführt ist, dass zur Bewegung des Halteelements entlang des Gleitbereichs eine erste Kraft erforderlich ist, wobei zur Bewegung des Halteelements aus der Rastposition heraus eine zweite Kraft erforderlich ist. Es gilt: erste Kraft ist kleiner als zweite Kraft.

Insbesondere ist das Halteelement über ein Federelement mit dem Grundkörper verbunden, wobei das Federelement in der Ausgangsposition des Halteelements maximal ausgelenkt ist. Mit zunehmender Verschwenkung des Halteelements gegenüber der

Ausgangsposition wird die Auslenkung des Federelements zunehmend reduziert.

Insbesondere kann die Verschwenkung des Halteelements durch das Federelement unterstützt oder (nach Verschwenkung des Halteelements aus der Rastposition heraus) bedingt werden.

Insbesondere ist das erste Ende durch ein drehbares Element gebildet, so dass das Element bei einem Verschwenken des Halteelements entlang der Führung abrollt. Das drehbare Element kann z. B. durch einen zylindrischen Körper gebildet sein, der einen Teil des ansonsten starren Halteelements bildet. Eine Drehachse des drehbaren Elements ist insbesondere parallel zu einer Achse der Verschwenkung des Halteelements angeordnet.

Insbesondere ist das drehbare Element über ein Antriebselement (z. B. ein Zahnrad oder Ähnliches) der Halterung zum Verschwenken des Halteelements antreibbar. Das Antriebselement ist z. B. an dem Grundkörper angeordnet. Insbesondere kann das Antriebselement über einen elektrischen Motor angetrieben werden.

Insbesondere kann das erste Ende oder das als drehbares Element ausgeführte erste Ende über mindestens einen Halter mit dem Grundkörper verbunden sein. Insbesondere kann das erste Ende so entlang der Führung an dem Grundkörper durch den Halter geführt werden.

Insbesondere weist die Halterung eine erste Führungsschiene und eine zweite Führungsschiene auf. Die Führungsschienen verlaufen insbesondere zueinander parallel, wobei das Halteelement zwischen den Führungsschienen angeordnet ist.

Es wird weiter ein Kraftfahrzeug vorgeschlagen, zumindest aufweisend eine Karosserie und die beschriebene, an der Karosserie angeordnete Halterung.

Insbesondere ist die Halterung an einer Seite des Kraftfahrzeugs angeordnet. Bevorzugt ist das Halteelement entlang der zumindest einen Führungsschiene im Wesentlichen parallel zu einer durch alle Radnaben des Kraftfahrzeugs definierten Ebene verlagerbar.

Die hier vorgeschlagene Orientierung der Führungsschiene und des Haltelements zueinander ermöglicht, dass z. B. bei einer Rotation des Halteelements (bedingt z. B. durch einen Kontakt mit einem Objekt) das Halteelement entlang der Führungsschiene verlagert wird.

Die Ausführungen zu der Halterung sind insbesondere auf das Kraftfahrzeug übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Kraftfahrzeug in einer Seitenansicht;
- Fig. 2:: eine erste Ausführungsvariante einer Halterung in einer Seitenansicht;
- Fig. 3:: die Halterung nach Fig. 2 in einer Draufsicht;
- Fig. 4:: die Halterung nach Fig. 3 in einer Draufsicht im Schnitt, in einer Ausgangsposition;
- Fig. 5:: die Halterung nach Fig. 4 nach einer Verschwenkung des Halteelements;
- Fig. 6:: eine zweite Ausführungsvariante einer Halterung in einer perspektivischen Ansicht;
- Fig. 7:: die Halterung nach Fig. 6 in einer perspektivischen Ansicht; in einer Ausgangsposition;
- Fig. 8:: eine dritte Ausführungsvariante einer Halterung in einer perspektivischen Ansicht;
- Fig. 9:: die Halterung gemäß der zweiten Ausführungsvariante in einer perspektivischen Ansicht, in einer Ausgangsposition;
- Fig. 10:: die Halterung nach Fig. 9 während einer Verschwenkung des Halteelements;
- Fig. 11:: die Halterung nach Fig. 9 und 10 in einer vollständig verschwenkten Position.

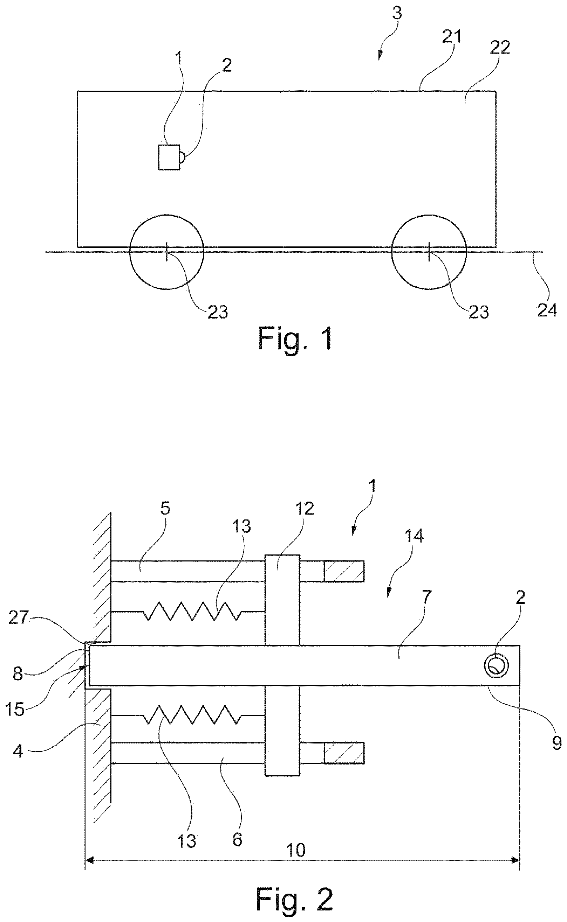

Fig. 1 zeigt ein Kraftfahrzeug 3 in einer Seitenansicht. Das Kraftfahrzeug 3 umfasst eine Karosserie 23 mit einer daran befestigten Halterung 1. Die Halterung 1 ist an einer Seite 22 des Kraftfahrzeugs 3 angeordnet. Das Halteelement 4 ist entlang der Führungsschiene 5, 6 im Wesentlichen parallel zu einer durch alle Radnaben 23 des Kraftfahrzeugs 3 definierten Ebene 24 verlagerbar.

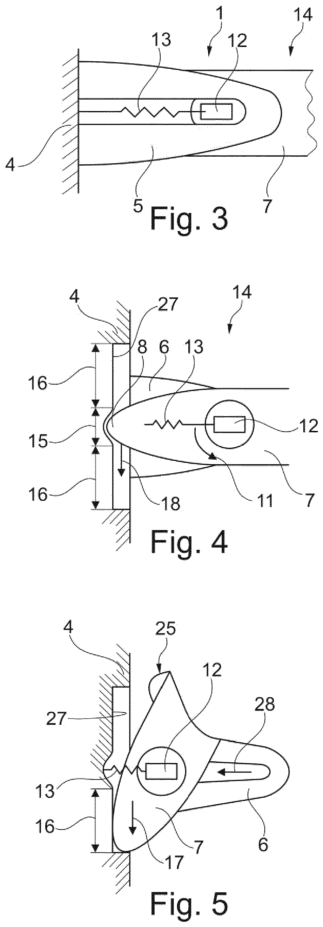

Fig. 2 zeigt eine erste Ausführungsvariante einer Halterung 1 in einer Seitenansicht. Fig. 3 zeigt die Halterung 1 nach Fig. 2 in einer Draufsicht. Fig. 4 zeigt die Halterung 1 nach Fig. 3 in einer Draufsicht im Schnitt, in einer Ausgangsposition 14. Fig. 5 zeigt die Halterung 1 nach Fig. 4 nach einer Verschwenkung 11 des Halteelements 7. Die Fig. 2 bis 5 werden im Folgenden gemeinsam beschrieben. Auf die Ausführungen zu Fig. 1 wird verwiesen.

Die Halterung 1 weist einen Grundkörper 4 mit einer Führung 27 und ein mit dem Grundkörper 4 über die erste Führungsschiene 5 und die zweite Führungsschiene 6 verbundenes, gegenüber dem Grundkörper 4 verschwenkbares Halteelement 7 auf. Das Halteelement 7 erstreckt sich zwischen einem ersten Ende 8 und einem zweiten Ende 9 entlang einer Erstreckung 10. Am zweiten Ende 9 ist die Kamera 2 angeordnet. Das erste Ende 8 ist an der Führung 27 angeordnet. Das Haltelement 7 ist zwischen dem ersten Ende 8 und dem zweiten Ende 9 mit den Führungsschienen 5, 6 verschwenkbar verbunden. Bei einer Verschwenkung 11 des Halteelements 7 ist das erste Ende 8 entlang der Führung 27 und das Halteelement 7 (gegenüber dem Grundkörper 4) entlang den Führungsschienen 5, 6 verlagerbar.

Das Halteelement 7 ist über einen Zapfen 12 drehbar an den Führungsschienen 5, 6 gelagert. Das Halteelement 7 wird über den Zapfen 12 entlang den Führungsschienen 5, 6 geführt. Der Zapfen 12 und damit das Halteelement 7 wird bei einer Verschwenkung 11 des Halteelements 7 gegenüber den Führungsschienen 5, 6 um die Verlagerung 28 (transversal) bewegt.

Hier ist das Haltelement 7 gegenüber dem Zapfen 12 verschwenkbar. Der Zapfen 12 ist in den Führungsschienen 5, 6 verlagerbar angeordnet, aber nicht gegenüber der Führungsschienen 5, 6 drehbar.

Das Halteelement 7 ist über ein Federelement 13 mit dem Grundkörper 4 verbunden. Vorliegend ist der Zapfen 12, über den das Halteelement 7 drehbar an den Führungsschienen 5, 6 gelagert ist, über das Federelement 13 mit dem Grundkörper 4 verbunden.

Das Federelement 13 ist eine Zugfeder. Das Federelement 13 ist in der Ausgangsposition 14 des Halteelements 7 maximal ausgelenkt. Mit zunehmender Verschwenkung 11 des Halteelements 7 gegenüber der Ausgangsposition 14 wird die Auslenkung des Federelements 13 zunehmend reduziert. Die Verschwenkung 11 des Halteelements 7 wird durch das Federelement 13 unterstützt bzw. (nach Verschwenkung 11 des Halteelements 7 aus der Rastposition 15 heraus) dadurch bedingt.

Das erste Ende 8 ist in einer Ausgangsposition 14 des Halteelements 7 in einer Rastposition 15 der Führung 27 angeordnet (siehe Fig. 4). Die Rastposition 15 wird durch eine Vertiefung der Führung 27 gebildet, in der das Halteelement 7 mit einer Rastnase angeordnet ist.

Die Führung 27 weist benachbart zu der Rastposition 15 einen Gleitbereich 16 auf, wobei die Rastposition 15 so ausgeführt ist, dass zur Bewegung des Haltelements 7 entlang des Gleitbereichs 16 eine erste Kraft 17 (siehe Fig. 5, zumindest bis zum Erreichen der dargestellten Endposition) erforderlich ist, wobei zur Bewegung des Halteelements 7 aus der Rastposition 15 heraus eine zweite Kraft 18 erforderlich ist (siehe Fig. 4).

Die Verschwenkung 11 des Halteelements 7 kann über einen an dem Halteelement 7 angeordneten Dämpfer 25 (kann alternativ oder zusätzlich an dem Grundkörper 4 angeordnet sein), der mit dem Grundkörper 4 zusammenwirkt, begrenzt werden (siehe Fig. 5).

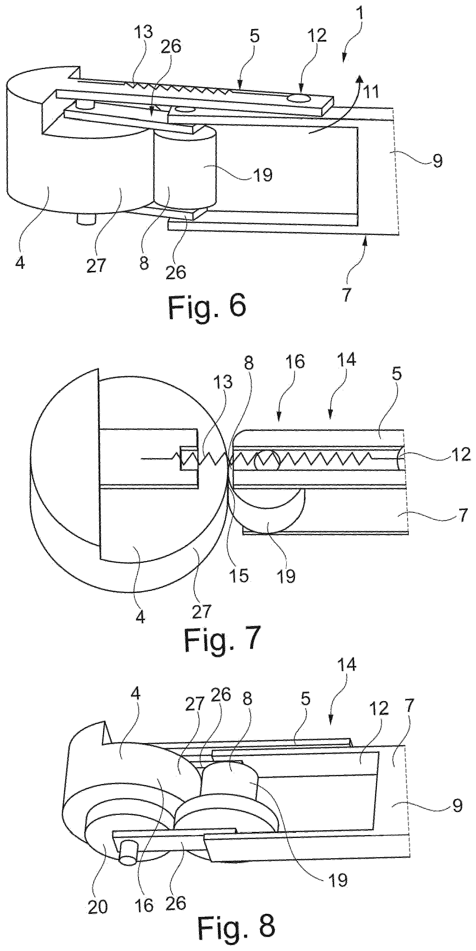

Fig. 6 zeigt eine zweite Ausführungsvariante einer Halterung 1 in einer perspektivischen Ansicht. Fig. 7 zeigt die Halterung 1 nach Fig. 6 in einer perspektivischen Ansicht; in einer Ausgangsposition 14. Die Fig. 6 und 7 werden im Folgenden gemeinsam beschrieben. Auf die Ausführungen zu den Fig. 2 bis 5 wird verwiesen.

Im Unterschied zu der ersten Ausführungsvariante wird das erste Ende 8 des Haltelements 7 durch ein drehbares Element 19 gebildet, so dass das Element 19 bei einem Verschwenken des Halteelements 7 entlang der Führung 27 abrollt. Das drehbare Element wird durch einen zylindrischen Körper gebildet, der einen Teil des ansonsten starren Halteelements 7 bildet. Eine Drehachse des drehbaren Elements 19 ist parallel zu einer Achse der Verschwenkung 11 des Halteelements 7 angeordnet. Das als drehbares Element 19 ausgeführte erste Ende 8 ist hier über jeweils einen Halter 26 mit dem Grundkörper 4 verbunden. Das erste Ende 8 kann so entlang der Führung 27 an dem Grundkörper 4 durch die Halter 26 geführt werden.

Fig. 8 zeigt eine dritte Ausführungsvariante einer Halterung 1 in einer perspektivischen Ansicht (die insbesondere für einen motorischen Antrieb geeignet ausgeführt ist). Auf die Ausführungen zu Fig. 6 und 7 wird verwiesen.

Im Unterschied zur zweiten Ausführungsvariante ist das drehbare Element 19 über ein Antriebselement 20 (z. B. ein Zahnrad oder Ähnliches) der Halterung 1 zum Verschwenken des Halteelements 7 antreibbar. Das Antriebselement 20 ist an dem Grundkörper 4 angeordnet.

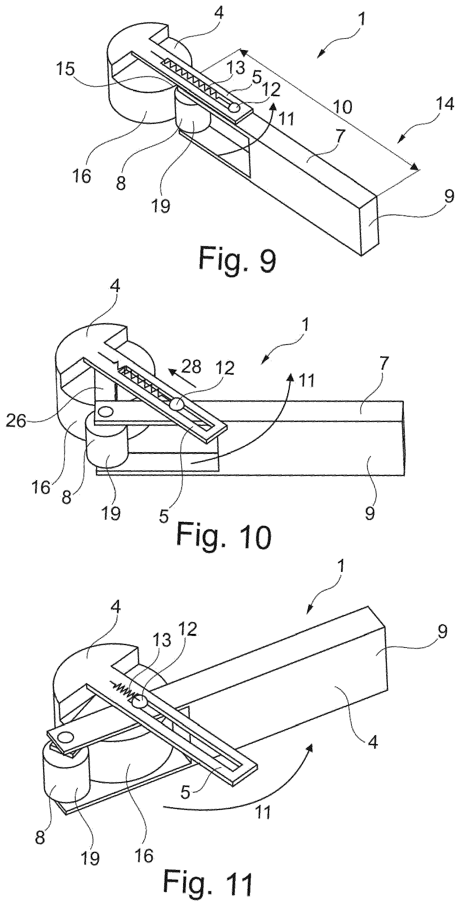

Fig. 9 zeigt die Halterung 1 gemäß der zweiten Ausführungsvariante in einer perspektivischen Ansicht, in einer Ausgangsposition 14. Fig. 10 zeigt die Halterung 1 nach Fig. 9 während einer Verschwenkung 11 des Halteelements 7. Fig. 11 zeigt die Halterung 1 nach Fig. 9 und 10 in einer vollständig verschwenkten Position. Die Fig. 9 bis 11 werden im Folgenden gemeinsam beschrieben. Auf die Ausführungen zu den Fig. 6 und 7 wird verwiesen.

In der Ausgangsposition 14 ist das erste Ende 8 (hier das drehbare Element 19) in einer Rastposition 15 der Führung 27 angeordnet. In der teilweise verschwenkten Position (Fig. 10) befindet sich das erste Ende 8 in dem Gleitbereich 16 der Führung 27. Das erste Ende 8 wird über Halter 26 gegenüber dem Grundkörper 4 geführt. Der Zapfen 12 und das Halteelement 7 werden um die Verlagerung 28 entlang der ersten Führungsschiene 5 verlagert. In der vollständig verschwenkten Position (Fig. 11) ist der Zapfen 12 so weit gegenüber der ersten Führungsschiene 5 verlagert, dass er im Bereich des Grundkörpers 4 angeordnet ist.

## Patentansprüche

1. Halterung (1) für eine Kamera (2) an einem Kraftfahrzeug (3), zumindest aufweisend einen Grundkörper (4) mit einer Führung (27) und ein mit dem Grundkörper (4) über zumindest eine Führungsschiene (5, 6) verbundenes, gegenüber dem Grundkörper (4) verschwenkbares Halteelement (7), das sich zwischen einem ersten Ende (8) und einem zweiten Ende (9) entlang einer Erstreckung (10) erstreckt, wobei am zweiten Ende (9) die Kamera (2) anordenbar ist, wobei das erste Ende (8) an der Führung (27) angeordnet ist, wobei das Halteelement (7) zwischen dem ersten Ende (8) und dem zweiten Ende (9) mit der zumindest einen Führungsschiene (5, 6) verschwenkbar verbunden ist; wobei bei einer Verschwenkung (11) des Halteelements (7) das erste Ende (8) entlang der Führung (27) und das Halteelement (7) entlang der zumindest einen Führungsschiene (5, 6) verlagerbar sind; **dadurch gekennzeichnet, dass** die Führung (27) und die zumindest eine Führungsschiene (5, 6) ortsfest zueinander angeordnet sind; und dass, das Halteelement (7) über zumindest ein Federelement (13) mit dem Grundkörper (4) verbunden ist.

2. Halterung (1) nach Anspruch 1, wobei das Halteelement (7) über einen Zapfen (12) drehbar an der zumindest einen Führungsschiene (5, 6) gelagert ist.

3. Halterung (1) nach einem der vorhergehenden Patentansprüche, wobei das erste Ende (8) in einer Ausgangsposition (14) des Halteelements (7) in einer Rastposition (15) der Führung (27) angeordnet ist.

4. Halterung (1) nach Patentanspruch 3, wobei die Führung (27) benachbart zu der Rastposition (15) einen Gleitbereich (16) aufweist, wobei die Rastposition (15) so ausgeführt ist, dass zur Bewegung des Halteelements (7) entlang des Gleitbereichs (16) eine erste Kraft (17) erforderlich ist, wobei zur Bewegung des Halteelements (7) aus der Rastposition (15) heraus eine zweite Kraft (18) erforderlich ist, wobei gilt: erste Kraft ist kleiner als zweite Kraft.

5. Halterung (1) nach einem der vorhergehenden Patentansprüche 3 und 4, wobei das Halteelement (7) über ein Federelement (13) mit dem Grundkörper (4) verbunden ist, wobei das Federelement (13) in der Ausgangsposition (14) des Halteelements (7) maximal ausgelenkt ist.

6. Halterung (1) nach einem der vorhergehenden Patentansprüche, wobei das erste Ende (8) durch ein drehbares Element (19) gebildet ist, so dass das Element (19) bei der Verschwenkung (11) des Halteelements (7) entlang der Führung (27) abrollt.

7. Halterung (1) nach Patentanspruch 6, wobei das drehbare Element (19) über ein Antriebselement (20) der Halterung (1) zu der Verschwenkung (11) des Halteelements (7) antreibbar ist.

8. Halterung (1) nach einem der vorhergehenden Patentansprüche, wobei die Halterung (1) eine erste Führungsschiene (5) und eine zweite Führungsschiene (6) aufweist.

9. Kraftfahrzeug (3), zumindest aufweisend eine Karosserie (23) und eine an der Karosserie (21) angeordnete Halterung (1) nach einem der vorhergehenden Patentansprüche.

10. Kraftfahrzeug (3) nach Patentanspruch 9, wobei die Halterung (1) an einer Seite (22) des Kraftfahrzeugs (3) angeordnet ist; wobei das Halteelement (7) entlang der zumindest einen Führungsschiene (5, 6) im Wesentlichen parallel zu einer durch alle Radnaben (23) des Kraftfahrzeugs (3) definierten Ebene (24) verlagerbar ist.

## Claims

1. Support (1) for a camera (2) on a motor vehicle (3), comprising at least a main body (4) with a guide (27) and a bracket element (7) which is pivotable relative to the main body (4) and is connected to the main body (4) via at least one guide rail (5, 6), and which extends along an extent (10) between a first end (8) and a second end (9), wherein the camera (2) may be arranged on the second end (9), wherein the first end (8) is arranged on the guide (27) wherein the bracket element (7) is pivotably connected to the at least one guide rail (5, 6) between the first end (8) and the second end (9); wherein, when the bracket element (7) is pivoted (11), the first end (8) is displaceable along the guide (27) and the bracket element (7) is displaceable along the at least one guide rail (5, 6); **characterized in that** the guide (27) and the at least one guide rail (5, 6) are arranged stationarily relative to each other; and **in that** the bracket element (7) is connected to the main body (4) via at least one spring element (13).

2. Support (1) according to Claim 1, wherein the bracket element (7) is rotatably mounted on the at least one guide rail (5, 6) via a peg (12).

3. Support (1) according to either of the preceding claims, wherein in a starting position (14) of the bracket element (7), the first end (8) is arranged in a latching position (15) of the guide (27).

4. Support (1) according to Claim 3, wherein the guide (27) has a sliding region (16) adjacent to the latching position (15), wherein the latching position (15) is configured such that a first force (17) is required to move the bracket element (7) along the sliding region (16), wherein a second force (18) is required to move the bracket element (7) out of the latching position (15), wherein the first force is smaller than the second force.

5. Support (1) according to either of the preceding Claims 3 and 4, wherein the bracket element (7) is connected to the main body (4) via a spring element (13), wherein the spring element (13) is deflected to a maximum when the bracket element (7) is in the starting position (14).

6. Support (1) according to any of the preceding claims, wherein the first end (8) is formed by a rotatable element (19) so that the element (19) rolls along the guide (27) when the bracket element (7) is pivoted (11).

7. Support (1) according to Claim 6, wherein the rotatable element (19) may be driven via a drive element (20) of the support (1) in order to pivot (11) the bracket element (7).

8. Support (1) according to any of the preceding claims, wherein the support (1) has a first guide rail (5) and a second guide rail (6).

9. Motor vehicle (3) having at least a bodywork (23) and a support (1), according to any of the preceding claims, arranged on the bodywork (21).

10. Motor vehicle (3) according to Claim 9, wherein the support (1) is arranged on a side (22) of the motor vehicle (3); wherein the bracket element (7) can be displaced along the at least one guide rail (5, 6) substantially parallel to a plane (24) defined by all wheel hubs (23) of the motor vehicle (3).

## Revendications

1. Support (1) pour une caméra (2) sur un véhicule automobile (3), présentant au moins un corps de base (4) comprenant un guide (27) et un élément de support (7) relié au corps de base (4) par l'intermédiaire d'au moins un rail de guidage (5, 6), pouvant pivoter par rapport au corps de base (4), qui s'étend le long d'une extension (10) entre une première extrémité (8) et une deuxième extrémité (9), la caméra (2) pouvant être agencée à la deuxième extrémité (9), la première extrémité (8) étant agencée sur le guide (27), l'élément de support (7) étant relié de manière pivotante à l'au moins un rail de guidage (5, 6) entre la première extrémité (8) et la deuxième extrémité (9) ; lors d'un pivotement (11) de l'élément de support (7), la première extrémité (8) pouvant être déplacée le long du guide (27) et l'élément de support (7) pouvant être déplacé le long de l'au moins un rail de guidage (5, 6) ; **caractérisé en ce que** le guide (27) et l'au moins un rail de guidage (5, 6) sont agencés de manière fixe l'un par rapport à l'autre ; et **en ce que** l'élément de support (7) est relié au corps de base (4) par l'intermédiaire d'au moins un élément élastique (13).

2. Support (1) selon la revendication 1, l'élément de support (7) étant monté de manière rotative sur l'au moins un rail de guidage (5, 6) par l'intermédiaire d'un tourillon (12).

3. Support (1) selon l'une quelconque des revendications précédentes, la première extrémité (8) étant agencée dans une position initiale (14) de l'élément de support (7) dans une position d'encliquetage (15) du guide (27).

4. Support (1) selon la revendication 3, le guide (27) présentant une zone de glissement (16) au voisinage de la position d'encliquetage (15), la position d'encliquetage (15) étant réalisée de telle sorte qu'une première force (17) est nécessaire pour déplacer l'élément de support (7) le long de la zone de glissement (16), une deuxième force (18) étant nécessaire pour déplacer l'élément de support (7) hors de la position d'encliquetage (15), la première force étant inférieure à la deuxième force.

5. Support (1) selon l'une quelconque des revendications 3 et 4 précédentes, l'élément de support (7) étant relié au corps de base (4) par l'intermédiaire d'un élément élastique (13), l'élément élastique (13) étant dévié au maximum dans la position initiale (14) de l'élément de support (7).

6. Support (1) selon l'une quelconque des revendications précédentes, la première extrémité (8) étant formée par un élément rotatif (19), de telle sorte que l'élément (19) roule le long du guide (27) lors du pivotement (11) de l'élément de support (7).

7. Support (1) selon la revendication 6, l'élément rotatif (19) pouvant être entraîné par l'intermédiaire d'un élément d'entraînement (20) du support (1) pour le pivotement (11) de l'élément de support (7).

8. Support (1) selon l'une quelconque des revendications précédentes, le support (1) présentant un premier rail de guidage (5) et un deuxième rail de guidage (6).

9. Véhicule automobile (3), présentant au moins une carrosserie (23) et un support (1) selon l'une quelconque des revendications précédentes agencé sur la carrosserie (21).

10. Véhicule automobile (3) selon la revendication 9, le support (1) étant agencé sur un côté (22) du véhicule automobile (3) ; l'élément de support (7) pouvant être déplacé le long de l'au moins un rail de guidage (5, 6) essentiellement parallèlement à un plan (24) défini par tous les moyeux de roue (23) du véhicule automobile (3).
